# FASCICULE DE BREVET EUROPEEN

(11) **EP 0 860 108 B1**
(45) Date de publication et mention de la délivrance du brevet: **09.01.2002**
(21) Numéro de dépôt: 98400407.7
(22) Date de dépôt: 19.02.1998
(51) Int. Cl.: A01F 29/00, A01K 5/00

(54) **Dispositif démêleur-déchiqueteur de produits du genre fourrage ou paille, disposés en vrac ou en balles dans la benne d'une machine distributrice**
Häcksel-Schneider für Futter oder Stroh in Ballen oder nicht gebunden in einen Behälter einer Verteilmaschine
Shredder-cutter for fodder or straw loaded loose or baled in the container of a distributing machine

(30) Priorité: 20.02.1997 FR 9702191
(43) Date de publication de la demande: 26.08.1998
(73) Titulaire: ETABLISSEMENTS LUCAS G. (Société Anonyme), F-85130 La Verrie (FR)
(72) Inventeur: Lucas, Gérard, 85130 La Verrie (FR)
(74) Mandataire: Phélip, Bruno

(56) Documents cités:
- WO-A-95/28077
- FR-A- 2 718 604
- US-A- 3 540 506

## Description

La présente invention concerne un dispositif démêleur-déchiqueteur de produits du genre fourrage ou paille, disposés en vrac ou en balles dans la benne d'une machine distributrice.

Des machines distributrices de ce genre, sont notamment décrites dans le document EP-A-0 384 791. Elles sont constituées d'une benne dont la partie aval, située juste avant le ventilateur d'éjection, comporte un ou plusieurs rotors dentés qui découpent les produits posés sur un fond mobile.

A la partie supérieure de la benne, au-dessus du rotor, on trouve une barrière qui retient les produits et permet en particulier le recyclage des paquets de produits afin d'éviter des détériorations au niveau du ventilateur.

Dans le document FR-A-2 727 280 de la demanderesse, la barrière frontale est doublée d'une second barrière située en aval. La première barrière, ou barrière frontale, coopère avec des disques lisses et permet de recycler les produits dans la benne et en particulier les paquets trop importants, et la seconde barrière, ou barrière aval, a pour fonction de retenir les paquets qui ont franchi la première barrière afin de les déchiqueter avant qu'ils n'atteignent le ventilateur d'éjection.

Dans ce dernier document, le rotor comporte donc des disques lisses interposés entre des disques tronçonneurs ; ces disques lisses coopèrent avec les dents de la première barrière et ont un diamètre inférieur à celui des disques tronçonneurs.

La présente invention propose un dispositif démêleur pour des rotors dentés simplifiés qui comportent uniquement des disques tronçonneurs.

Le dispositif selon l'invention est constitué d'au moins un rotor denté muni de disques tronçonneurs et, au-dessus de ce rotor, à la partie supérieure de la benne, d'une traverse supportant des organes de retenue répartis pour former deux barrières décalées l'une par rapport à l'autre dans le sens de progression des produits :- une première barrière frontale constituée des organes de retenue en forme de plaque, disposés dans le plan des disques auxquels ils sont associés et - une seconde barrière en retrait constituée des organes de retenue en forme de dents, disposés de part et d'autre desdites plaques, dans le plan des autres disques correspondants.

Toujours selon l'invention, les organes de retenue en forme de plaque de la première barrière sont fixés de façon amovible sur la traverse et comportent une arête frontale qui se situe dans un plan qui est sensiblement vertical et tangent à la périphérie amont du tambour du rotor ; ce plan peut être incliné par rapport à la normale d'un angle de ± 10° par exemple.

Selon une autre disposition de l'invention, l'arête inférieure des plaques de la première barrière est conformée en arc de cercle ou en arc dégageant, pour épouser la périphérie du disque tronçonneur associé, avec un faible jeu par rapport à l'extrémité de la denture de ces disques tronçonneurs ; ce jeu est par exemple compris entre 1 et 8 mm, de préférence inférieur à 5 mm.

Toujours selon l'invention, les organes de retenue en forme de dents, de la seconde barrière, sont fixés de façon amovible sous la traverse et ont une hauteur qui correspond au moins à la hauteur des disques tronçonneurs par rapport au tambour du rotor.

Selon une autre disposition, l'arête frontale des dents de la seconde barrière est située dans un plan qui fait un angle par rapport à la normale de l'ordre de 30°, lequel plan passe en amont de l'axe du rotor.

Toujours selon l'invention, les pointes actives des organes de retenue de la première barrière et de la seconde barrière, sont disposées symétriquement par rapport au plan vertical passant par l'axe du rotor et le jeu entre ces pointes et la périphérie de la denture est compris entre 1 et 8 mm, de préférence inférieur à 5 mm.

Toujours selon l'invention, pour éviter les phénomènes de bourrage, la traverse qui porte les organes de retenue, est disposée le plus loin possible du rotor ; elle est disposée par exemple en aval du plan vertical qui passe par l'axe de rotation du rotor, à une distance de ce plan qui correspond sensiblement à la distance qui la sépare de la périphérie des disques tronçonneurs.

L'invention sera encore détaillée à l'aide de la description suivante et des dessins annexés donnés à titre indicatif, et dans lesquels :
- la figure 1 représente vu schématiquement de côté, le dispositif démêleur selon l'invention intégré dans une machine distributrice dont les éléments essentiels sont simplement esquissés ;
- la figure 2 représente, en perspective, le dispositif démêleur-déchiqueteur selon l'invention.

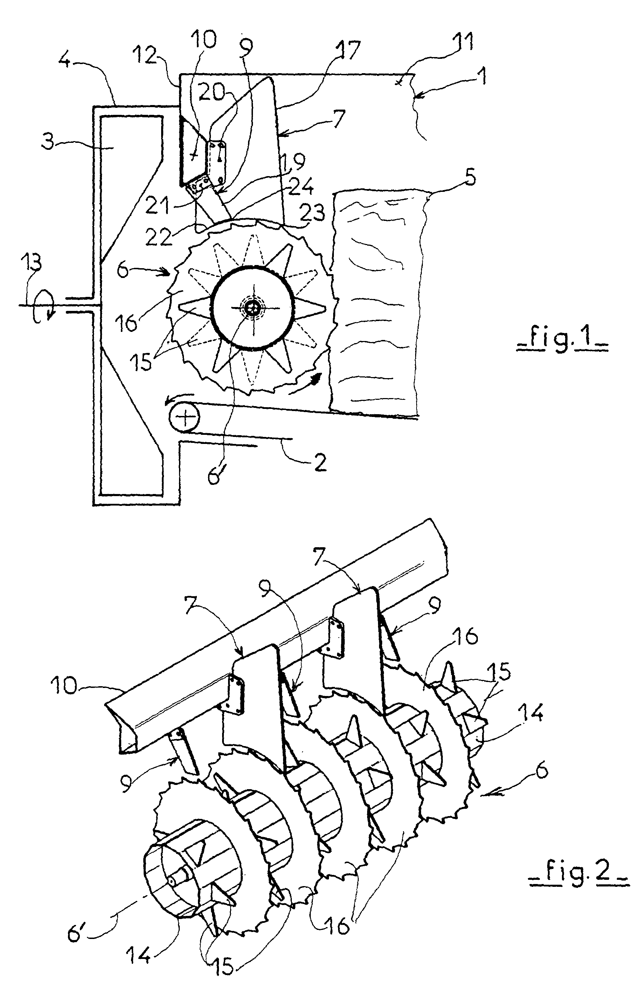

Tel que schématisé figure 1, la machine comprend une benne 1 dans le fond de laquelle on trouve un tapis convoyeur 2 et, à l'avant de ladite benne, un ventilateur éjecteur 3 disposé dans une chambre 4. Cette machine peut comporter, comme décrit dans le document EP-A-0 384 791 précité, un rotor ou plusieurs rotors superposés. Elle peut également comporter un simple tapis de reprise en lieu et place du ventilateur.

Le convoyeur 2 fait progresser une balle 5 de fourrage ou de paille par exemple vers un dispositif démêleur-déchiqueteur qui est constitué dans l'exemple représenté figure 1, d'un rotor 6 et, disposé au-dessus de ce rotor 6 d'un système de barrière constitué d'organes de retenue 7 et 9 montés sur une traverse 10.

Cette traverse 10 s'étend entre les parois latérales 11 de la benne 1, à la partie avant de cette benne, devant le ventilateur 3, contre la paroi 12 de la chambre 4.

Le dispositif démêleur-déchiqueteur apparaît en perspective, figure 2. Il est constitué du rotor 6 qui est centré sur un axe 6' horizontal situé dans l'exemple représenté figure 1, sensiblement au même niveau que l'axe 13 du ventilateur 3.

Le rotor 6 comprend un tambour 14 sur lequel sont réparties des dents en forme de pointes 15 qui s'étendent radialement en saillie à la périphérie du tambour 14. Des disques tronçonneurs 16 sont régulièrement répartis sur la longueur du tambour 14. Leur diamètre est dans l'exemple représenté figure 1 de l'ordre de deux fois celui du tambour. On remarque aussi que les pointes 15 ont une hauteur qui est inférieure à celle des disques 16, par rapport à la surface périphérique du tambour 14.

Les disques tronçonneurs 16 comportent sur leur périphérie une denture qui permet de tirer et de sectionner les fibres des balles 5. Les dents 15 propulsent les fibres dans les pales du ventilateur 3.

Pour éviter d'entraîner des paquets trop importants de produits dans la chambre du ventilateur, une première barrière constituée par les organes de retenue 7, recycle les produits en les renvoyant dans la benne. Ces organes de retenue 7 sont en forme de plaques métalliques situées dans le plan des disques tronçonneurs 16 correspondants. Elles divisent l'espace entre les parois latérales 11 de la benne 1, formant des couloirs de passage pour les produits découpés et entraînés par le rotor 6. L'arête frontale 17 de ces plaques est située en amont du plan vertical passant par l'axe 6' du rotor et elle se situe elle-même dans un plan qui passe approximativement par la périphérie du tambour 14, en amont dans la benne 1. Ce plan des arêtes 17 peut faire un angle de ± 10° par rapport à la verticale.

Une seconde barrière est constituée d'organes de retenue 9 en forme de dents. L'arête 19 de ces dents est située en aval du plan vertical passant par l'axe 6' du rotor et elle est située dans un plan qui fait un angle de l'ordre de 30° par rapport à la normale, lequel plan coupe le tambour 14 en amont de l'axe 11.

Les organes de retenue 7 et 9 ont une épaisseur qui est de l'ordre de celle des disques 16. Ils sont fixés de façon amovible sur la traverse 10 et en particulier sont boulonnés sur des platines 20 et 21 respectivement. Ainsi, les organes de retenue 9 peuvent être démontés lorsque le produit à traiter est par exemple constitué de fibres longues.

La traverse 10 est en retrait du plan vertical passant par l'axe 6' du rotor, à une distance qui correspond sensiblement à la distance qui la sépare de la périphérie des disques tronçonneurs 16.

La hauteur des organes de retenue 9 correspond au moins à la distance entre la périphérie des disques tronçonneurs 16 et à la périphérie du tambour 14.

L'arête frontale 17 des organes de retenue 7 s'étend jusqu'à la partie supérieure des parois latérales 11 de la benne. Cette arête fait vraiment obstacle aux paquets importants de produits et permet de les renvoyer dans la benne pour le recyclage.

On remarque, figure 1, que l'arête inférieure 22 des organes de retenue 7 est conformée en arc de cercle à la périphérie du disque tronçonneur 16. Cet arc s'étend sur environ 1/6 de la périphérie des disques 16 et il est centré sur l'axe du rotor 6 ou il forme un arc dégageant légèrement à l'aval. Le jeu au niveau de la pointe active 23 de l'organe de retenue 7, est le plus faible possible.

La pointe active 24 de l'organe de retenue 9 fait également un jeu le plus faible possible avec la périphérie des dents des disques 16. Ce jeu pour les arêtes 23 et 24, est par exemple compris entre 1 et 8 mm, de préférence inférieur à 5 mm.

Comme représenté sur les figures, le rotor 6 comporte cinq disques tronçonneurs 16 dont deux sont associés aux organes de retenue 7. Les organes de retenue 9 sont disposés de part et d'autre des organes de retenue 7, c'est-à-dire en concordance avec le disque disposé au centre et les disques latéraux.

Le rotor peut comporter un nombre plus important de disques selon la dimension de la machine. Ces disques 16 sont écartés d'une distance comprise entre 150 et 300 mm. D'une manière générale, les organes de retenue 7 et 9 sont disposés en quinconce ; les organes 9 sont placés en concordance avec les disques latéraux et le disque central du rotor.

Les pointes 15 sont par exemple au nombre de six sur chaque tronçon de rotor délimité par les disques 16. Elles sont décalées angulairement entre deux tronçons adjacents et elles sont disposées en spirale de façon à faire converger les produits vers le centre du rotor et du ventilateur 1.

## Revendications

1. Dispositif démêleur-déchiqueteur de produits du genre fourrage ou paille, disposés en vrac ou en balles dans la benne d'une machine distributrice, constitué d'au moins un rotor denté (6) muni de disques tronçonneurs (16), **caractérisé en ce qu'**il comporte, au-dessus de ce rotor, à la partie supérieure de ladite benne (1), une traverse (10) supportant des organes de retenue (7, 9), répartis pour former deux barrières décalées l'une par rapport à l'autre dans le sens de progression des produits :- une première barrière frontale dont les organes de retenue (7) sont constitués de plaques disposées dans le plan des disques (16) auxquels ils sont associés et - une seconde barrière en retrait constituée des organes de retenue (9) en forme de dents, disposés de part et d'autre desdites plaques, dans le plan des autres disques (16) correspondants.

2. Dispositif démêleur-déchiqueteur selon la revendication 1, **caractérisé en ce que** les organes de retenue (7) en forme de plaques, fixés sur la traverse (10), comportent une arête frontale (17) qui se situe dans un plan sensiblement vertical et tangent à la périphérie amont du tambour (14) du rotor (6).

3. Dispositif démêleur-déchiqueteur selon la revendication 2, **caractérisé en ce que** l'arête inférieure (22) des plaques constituant les organes de retenue (7), est conformée en arc de cercle ou en arc dégageant pour épouser la périphérie du disque tronçonneur (16) associé, avec un faible jeu par rapport à l'extrémité de la denture de ces disques (16), compris par exemple entre 1 et 8 mm, de préférence inférieur à 5 mm.

4. Dispositif démêleur-déchiqueteur selon l'une quelconque des revendications 1 à 3, **caractérisé en ce que** les organes de retenue (9) en forme de dents, fixés sur la traverse (10), ont une hauteur qui correspond au moins à la hauteur des disques tronçonneurs (16) par rapport à la périphérie du tambour (14) du rotor (6).

5. Dispositif démêleur-déchiqueteur selon la revendication 4, **caractérisé en ce que** l'arête frontale (19) des dents formant les organes de retenue (9) est située dans un plan qui fait un angle de l'ordre de 30° par rapport à la normale, lequel plan passe en amont de l'axe (6') du rotor (6).

6. Dispositif démêleur-déchiqueteur selon l'une quelconque des revendications 2 à 5, **caractérisé en ce que** les pointes actives des organes de retenue (7 et 9) sont disposées symétriquement par rapport au plan vertical passant par l'axe (6') du rotor et le jeu par rapport à la périphérie des disques (16) est compris entre 1 et 8 mm, de préférence inférieur à 5 mm.

7. Dispositif démêleur-déchiqueteur selon l'une quelconque des revendications 1 à 6, **caractérisé en ce que** la traverse (10) qui porte les organes de retenue (7 et 9) est disposée en aval du plan vertical qui passe par l'axe (6') de rotation du rotor (6), à une distance de ce plan qui correspond sensiblement à la distance qui sépare cette traverse de la périphérie des disques tronçonneurs (16).

8. Dispositif démêleur-déchiqueteur selon l'une quelconque des revendications 1 à 7, **caractérisé en ce que** le rotor (6) comprend des disques tronçonneurs (16) espacés de 150 à 300 mm et, sur chaque tronçon délimité par ces derniers, des pointes (15) dont la hauteur est inférieure à celle des disques tronçonneurs, lesquelles pointes sont réparties en hélice de façon à faire converger les produits vers le centre du rotor.

9. Dispositif démêleur-déchiqueteur selon l'une des revendications 3 ou 4, **caractérisé en ce que** les organes de retenue (7 et 9) sont fixés de façon amovible sur la traverse (10).

## Claims

1. A shredder-cutter for fodder or straw loaded loose or baled in the container of a distributing machine, comprising at least one toothed rotor (6) provided with cutting disks (16) **characterised in that** it comprises, above the said rotor, at the upper section of the said container (1), a crossbeam (10) supporting retaining members (7, 9), distributed to form two barriers staggered with respect to one another in the feeding direction of the products: - a first front barrier whose retaining members (7) are made of plates arranged on the plane of the disks (16) with which they are associated and - a second back barrier comprising retaining members (9) in the form of teeth, provided on either side of the said plates, on the plane of the other corresponding disks (16).

2. A shredder-cutter according to claim 1, **characterised in that** the retaining members (7) in the form of plates, fixed to the crossbeam (10) comprise a front edge (17) situated on a plane substantially vertical and tangent to the upstream periphery of the drum (14) of the rotor (6).

3. A shredder-cutter according to claim 2, **characterised in that** the lower edge (22) of the plates forming the retaining members (7), is shaped as an arc of circle or a free arc to adapt the periphery of the cutting disk (16) associated, with a little clearance with respect to the end of the toothing of these disks (16), ranging for instance between 1 and 8 mm, preferably less than 5 mm.

4. A shredder-cutter according to any one of claims 1 to 3, **characterised in that** the height of the retaining members (9) in the form of teeth, fixed to the crossbeam (10) corresponds at least to the height of the cutting disks (16) with respect to the periphery of the drum (14) of the rotor (6).

5. A shredder-cutter according to claim 4, **characterised in that** the front edge (19) of the teeth forming the retaining members (9) is situated on the plane at an angle in the order of 30° with respect to the normal, which plane passes upstream the axis (6') of the rotor (6).

6. A shredder-cutter according to any one of claims 2 to 5, **characterised in that** the active spikes of the retaining members (7 and 9) are arranged symmetrically with respect to the vertical plane passing through the axis (6') of the rotor and the clearance with respect to the periphery of the disks (16) ranges between 1 and 8 mm, preferably less than 5 mm.

7. A shredder-cutter according to any one of claims 1 to 6, **characterised in that** the crossbeam (10) that carries the retaining members (7 and 9) is arranged downstream the vertical plane passing through the axis (6') of rotation of the rotor (6), at a distance from this plane that corresponds substantially to the distance between this crossbeam and the periphery of the cutting disks (16).

8. A shredder-cutter according to any one of claims 1 to 7, **characterised in that** the rotor (6) comprises cutting disks (16) spaced by 150 to 300 mm and, on each section delineated by the said disks, spikes (15) whose height is smaller than that of the cutting disks, which spikes are distributed into an helix in order to make the products converge toward the centre of the rotor.

9. A shredder-cutter according to any one of claims 3 or 4, **characterised in that** the retaining members (7 and 9) are fixed removable to the crossbeam (10).

## Patentansprüche

1. Häcksel-Schneider für Futter oder Stroh in Ballen oder nicht gebunden in einem Behälter einer Verteilmaschiene, welcher aus mindestens einem gezahnten, mit Sägescheiben (16) versehenen Rotor (6) besteht , **dadurch gekennzeichnet, dass** der Häcksel-Schneider über diesem Rotor im oberen Teil des besagten Behälters (1) einen Steg (10) aufweist, der getrennt angeordnete Rückhalteorgane (7, 9) zur Bildung von zwei gegeneinander in Laufrichtung der Produkte verschobene Schranken trägt: eine erste Stirnschranke, dessen Rückhalteorgane (7) aus Platten bestehen, welche in der Ebene der Scheiben (16), mit denen sie vereinigt sind, angeordnet sind und - eine zweite zurückgesetzte Schranke, welche aus zahnförmigen Rückhalteorganen besteht, die auf beiden Seiten der besagten Platten in der Ebene der anderen entsprechenden Scheiben (16) angeordnet sind.

2. Häcksel-Schneider nach Anspruch 1, **dadurch gekennzeichnet, dass** die scheibenförmigen Rückhalteorgane (7) , welche auf dem Steg (10) befestigt sind, eine Stirnkante (17) aufweisen, welche sich in einer im wesentlichen vertikalen und dem Umfang der Trommel (14) des Rotors (6) vorgeordneten parallelen Ebene befindet.

3. Häcksel-Schneider nach Anspruch 2, **dadurch gekennzeichnet, dass** die untere Kante (22) der Platten, die die Rückhalteorgane (7) bilden, in Form eines Kreisbogens oder eines freisetzenden Bogens ausgebildet ist , um sich dem Umfang der zugeordneten Sägescheibe (16) anzuschmiegen, mit einem kleinen Spiel in Bezug auf das Ende der Zähne dieser Scheiben (16) von z.B. zwischen 1 und 8mm, vorzugsweise unter 5 mm.

4. Häcksel-Schneider nach irgendeinem der Ansprüche 1 bis 3, **dadurch gekennzeichnet, dass** die auf dem Steg (10) befestigten zahnförmigen Rückhalteorgane (9) eine Höhe aufweisen, die mindestens der Höhe der Sägescheiben (16) in Bezug auf den Umfang der Trommel (14) des Rotors (6) entspricht.

5. Häcksel-Schneider nach Anspruch 4, **dadurch gekennzeichnet, dass** die Stirnkante (19) der die Rückhalteorgane (9) bildenden Zähne in einer Ebene gelegen ist, welche einen Winkel bildet , der in der Grössenordnung von 30° in Bezug auf die Senkrechte liegt, wobei die Ebene oberhalb der Achse (6') des Rotors (6) verläuft.

6. Häcksel-Schneider nach irgendeinem der Ansprüche 2 bis 5, **dadurch gekennzeichnet, dass** die aktiven Spitzen der Rückhalteorgane (7 und 9) symmetrisch in Bezug auf die durch die Drehachse (6') des Rotors (6) verlaufende Ebene angeordnet sind und dass das Spiel in Bezug auf den Umfang der Scheiben (16) z.B. zwischen 1 und 8mm, vorzugsweise unter 5 mm ausmacht.

7. Häcksel-Schneider nach irgendeinem der Ansprüche 1 bis 6, **dadurch gekennzeichnet, dass** der Steg (10), welcher die Rückhalteorgane (7 und 9) trägt, unterhalb der Vertikalebene, welche durch die Drehachse (6') des Rotors (6) verläuft, in einem Abstand von dieser Ebene, welcher im wesentlichen der Entfernung entspricht, die diesen Steg von dem Umfang der Sägescheiben trennt, angeordnet ist.

8. Häcksel-Schneider nach irgendeinem der Ansprüche 1 bis 7, **dadurch gekennzeichnet, dass** der Rotor (6) Sägescheiben (16) aufweist, die zwischen 150 und 300 mm beabstandet sind, und auf jedem von letzteren begrenzten Teil Spitzen (15) aufweist, deren Höhe niedriger als die der Sägescheiben ist, wobei diese Spitzen in Spiralform verteilt sind, um die Produkte zum Zentrum des Rotors konvergieren zu lassen.

9. Häcksel-Schneider nach einem der Ansprüche 3 oder 4, **dadurch gekennzeichnet, dass** die Rückhalteorgane (7 und 9) abnehmbar auf dem Steg (10) angeordnet sind.
